# EUROPÄISCHE PATENTSCHRIFT

(11) **EP 0 641 999 B1**
(45) Veröffentlichungstag und Bekanntmachung des Hinweises auf die Patenterteilung: **27.02.2002**
(21) Anmeldenummer: 94113964.4
(22) Anmeldetag: 06.09.1994
(51) Int. Cl.: G01F 1/60, G01F 1/00, G01F 1/58

(54) **Vorrichtung zur Messung des Stroms einer ein Messrohr durchströmenden Flüssigkeit**
Measuring device for liquid flow through measurement duct
Dispositif de mesure du débit d'un liquide à travers d'un conduit de mesure

(30) Priorität: 07.09.1993 DE 4330291
(43) Veröffentlichungstag der Anmeldung: 08.03.1995
(73) Patentinhaber: Fischer & Porter GmbH, D-37079 Göttingen (DE)
(72) Erfinder: Schäfer, Klaus, D-34346 Hann. Münden (DE)
(74) Vertreter: Fincke, Karl Theodor, Dipl.-Phys. Dr.

(56) Entgegenhaltungen:
- EP-A- 0 547 751
- DE-U- 9 103 046
- W.BOHL 'Technische Strömungslehre' , 7. AUFLAGE, VOGLER BUCHVERLAG , WüRZBURG * Seite 94, Absatz 4.4.3 *

## Beschreibung

Die Erfindung betrifft eine Vorrichtung zur Messung des Stroms einer ein Meßrohr durchströmenden Flüssigkeit mit einer oberhalb des Meßrohrs angeordneten Spule, einer unterhalb des Meßrohrs angeordneten Spule und zwei an den Seiten des Meßrohrs einander gegenüberstehend angeordneten Elektroden, bei dem die Spulen zur Erzeugung gleichsinniger und gegensinniger Magnetfelder erregbar sind und eine Korrekturschaltung vorgesehen ist, die die bei gleichsinnigen Magnetfeldern dem Strom der Flüssigkeit nur ungefähr proportionale Spannung zwischen den Elektroden zu einem dem Strom der Flüssigkeit proportionalen Ausgangssignal mittels einer Korrekturfunktion korrigiert, die von den Spannungen zwischen den Elektroden bei gleichsinnigen und gegensinnigen Magnetfeldern abhängt.

Eine Vorrichtung dieser Art ist bekannt (z.B. DE 9 103 046U). Sie gestattet auch eine Messung, wenn das Meßrohr nicht voll gefüllt ist.

Der Strom durch das Meßrohr kann nun einer "strömenden Bewegung" oder einer "schießenden Bewegung" entsprechen (vgl. das Buch "Technische Strömungslehre" von Bohl, 9. Auflage, Abschnitt 4.4.3). Eine strömende Bewegung ist durch eine Froude-Zahl Fr charakterisiert, die kleiner als 1 ist, eine schießende Bewegung durch eine Froude-Zahl Fr, die größer als 1 ist. Die bekannte Vorrichtung vermag nicht eine strömende Bewegung von einer schießenden Bewegung zu unterscheiden.

Die Erfindung geht von der Feststellung aus, daß ein Zusammenhang zwischen der den gleichsinnigen Magnetfeldern entsprechenden Spannung und der Korrekturfunktion eine solche Unterscheidung ermöglicht. Wird dieser Zusammenhang ausgenutzt, so kann man, je nachdem, ob eine strömende Bewegung oder eine schießende Bewegung vorliegt, eines von zwei verschiedenen Korrektursignalen verwenden, um ein Ausgangssignal zu erhalten, das von dem Bewegungszustand unabhängig ist.

Dementsprechend ist die Vorrichtung dadurch gekennzeichnet, daß die den gleichsinnigen Magnetfeldern entsprechende Spannung und die Korrekturfunktion einem Komparator zugeführt sind, der in Abhängigkeit davon, ob die Relation zwischen dieser Spannung und der Korrekturfunktion einer strömenden Bewegung oder einer schießenden Bewegung der Flüssigkeit durch das Meßrohr entspricht, ein der Korrekturfunktion entsprechendes Signal einem der strömenden Bewegung zugeordneten Korrelator zur Erzeugung eines der strömenden Bewegung entsprechenden Korrektursignals oder einem der schießenden Bewegung zugeordneten Korrelator zur Erzeugung eines der schießenden Bewegung entsprechenden Korrektursignals zuführt und daß mit dem einen Korrektursignal oder dem anderen Korrektursignal die den gleichsinnigen Magnetfeldern entsprechende Spannung zur Erzeugung des Ausgangssignals korrigiert wird.

Eine in besonders einfacher Weise zu verwirklichende, zu dem gewünschten Ergebnis zuverlässig führende Vorrichtung ist dadurch gekennzeichnet, daß die Korrekturfunktion durch den Quotienten aus der den gegensinnigen Magnetfeldern entsprechenden Spannung und der den gleichsinnigen Magnetfeldern entsprechenden Spannung gebildet ist und daß das Ausgangssignal dem Produkt aus der den gleichsinnigen Magnetfeldern entsprechenden Spannung und dem jeweiligen Korrektursignal entspricht.

Die Erfindung wird im folgenden an einem Ausführungsbeispiel unter Hinweis auf die beigefügten Zeichnungen erläutert.

Fig. 1 zeigt schematisch eine Vorrichtung nach der Erfindung mit zugehöriger Schaltungsanordnung.

Fig. 2 zeigt Strom- und Signalverläufe in der Schaltungsanordnung nach Fig. 1.

Fig. 3 dient der Erläuterung der Unterscheidung zwischen strömender Bewegung und schießender Bewegung.

Fig. 4 dient der Erläuterung der beiden Korrektursignale.

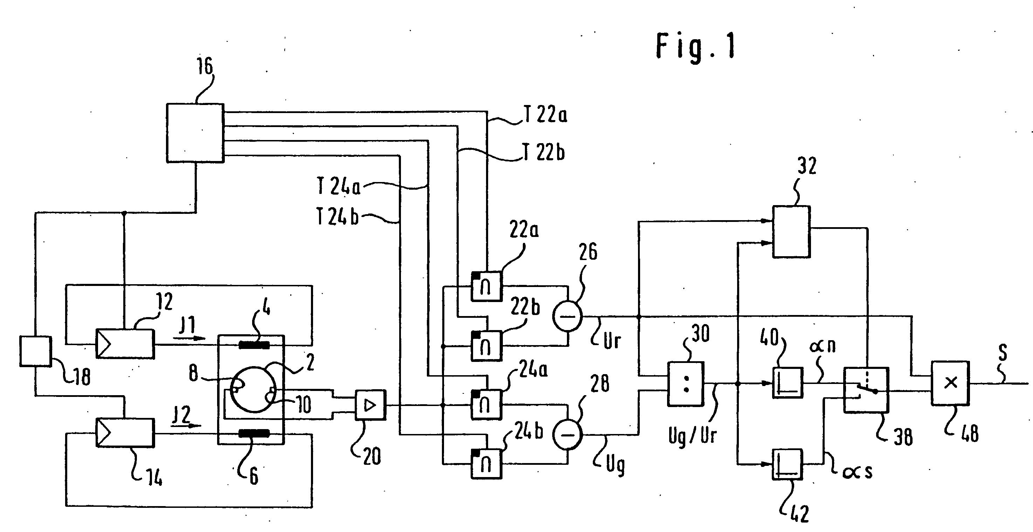

Fig. 1 zeigt ein Meßrohr 2 mit einer oberhalb angeordneten Spule 4 und einer unterhalb angeordneten Spule 6 sowie zwei einander gegenüberstehenden Elektroden 8, 10. Die Spulen 4, 6 sind von Treibern 12, 14, die von einem Taktgeber 16 gesteuert sind, zur Erzeugung gleichsinniger und gegensinniger Magnetfelder erregbar. Die Treiber 12, 14 werden von dem Taktgeber 16 über einen dem Treiber 14 zugeordneten Phasenschieber 18 derart gesteuert, daß ihnen um 90° in der Phase versetzte Rechteckströme zugeführt werden. Die dabei von den Elektroden 8, 10 abgegebene Spannung gelangt in einen Differenzverstärker 20, der mit seinem Ausgangssignal Halteglieder 22a, 22b, 24a, 24b beschickt. Diese Halteglieder 22a, 22b, 24a, 24b sind synchron zu den Treibern 12, 14 von dem Taktgeber gesteuert.

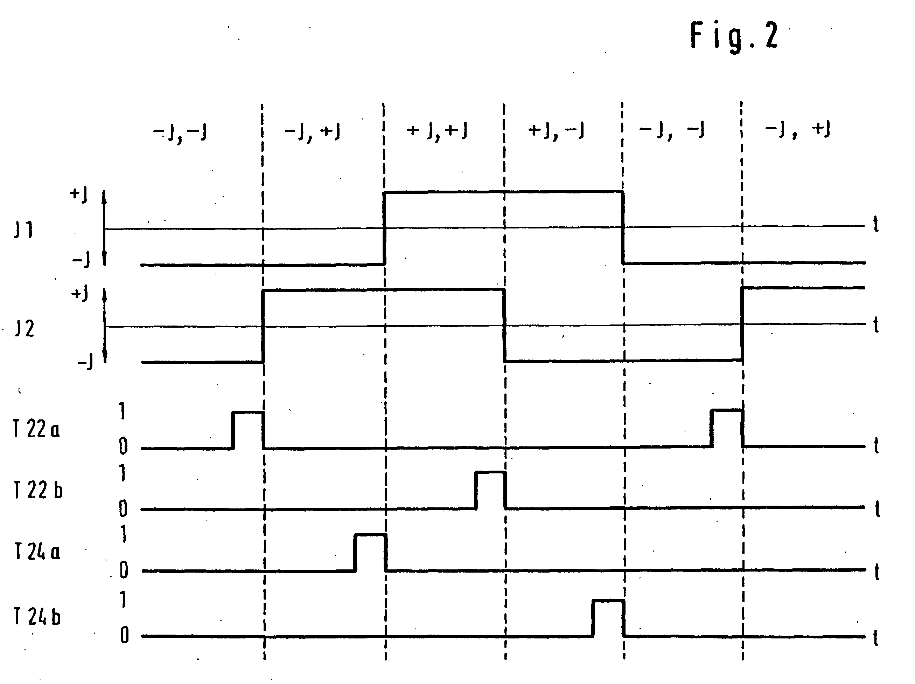

Die Spulen 4 und 6 werden mit Strömen gespeist, deren Verlauf in Abhängigkeit von der Zeit t aus Fig. 2 ersichtlich sind. Insgesamt ist die Speisung periodisch. Jede Periode hat vier Abschnitte, einen Abschnitt -I/-I, in dem gleichsinnige Magnetfelder erzeugt werden, einen Abschnitt -I/+I, in dem gegensinnige Magnetfelder erzeugt werden, einen Abschnitt +I/+I, in dem umgekehrt gleichsinnige Magnetfelder erzeugt werden und einen Abschnitt +I/-I, in dem umgekehrt gegensinnige Magnetfelder erzeugt werden. Am Ende eines jeden Abschnitts haben sich stationäre Zustände der Magnetfelder eingestellt. Die dann von den Elektroden 8, 10 abgegebenen Spannungen werden durch Freigabesignale T22a und T22b, T24a und T24b in die Halteglieder 22a, 22b, 24a, 24b aufgenommen und gespeichert. Die gespeicherten Signale werden zu Beginn einer neuen Periode wieder gelöscht.

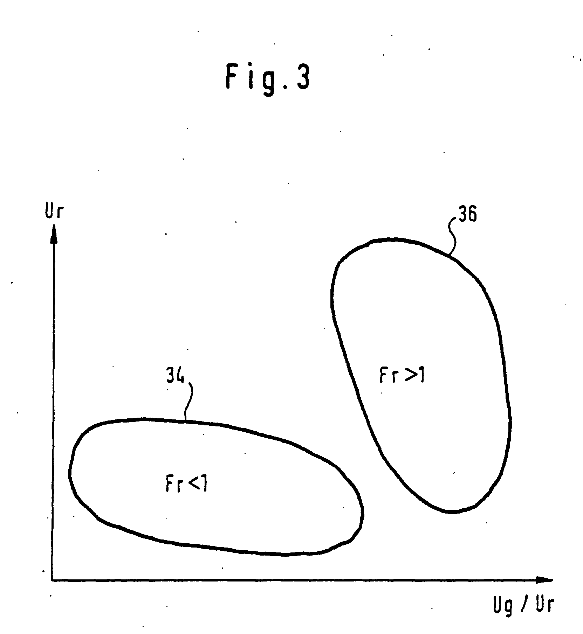

Von den Haltegliedern 22a, 22b wird über ein Subtrahierglied 26 eine Spannung Ur abgenommen, die der Spannung zwischen den Elektroden 8, 10 bei gleichsinnigen Magnetfeldern entspricht. Von den Haltegliedern 24a, 24b wird über ein Subtrahierglied 28 eine Spannung Ug abgenommen, die der Spannung zwischen den Elektroden 8, 10 bei gegensinnigen Magnetfeldern entspricht. Aus den Spannungen Ug und Ur wird mittels eines Dividierers 30 ein Signal gebildet, das Ug/Ur entspricht. Die Spannung Ur und das Ug/Ur entsprechende Signal gelangen in einen Komparator 32, der eine Unterscheidung gemäß Fig. 3 trifft. Innerhalb des Bereichs 34 stehen Ur und Ug/Ur in einem Zusammenhang, der einer strömenden Bewegung, also Fr<1, entspricht, im Bereich 36 in einem Zusammenhang, der einer schießenden Bewegung, also Fr > 1, entspricht. Je nachdem, welcher dieser Bereiche 34, 36 vorliegt, bringt der Komperator 32 einen Multiplexer 38 in einen ersten oder einen zweiten Schaltzustand.

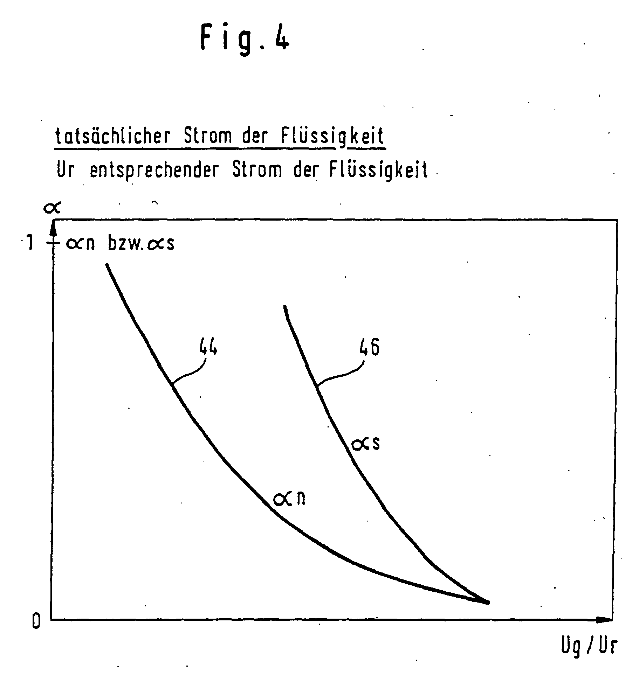

Das Ug/Ur entsprechende Signal wird außerdem zwei verschiedenen Korrekturtabellen 40, 42 zugeführt, von denen die Korrekturtabelle 40 strömender Bewegung zugeordnet ist und die Korrekturtabelle 42 schießender Bewegung zugeordnet ist. Die Korrekturtabellen 40, 42 geben dementsprechende Korrekturfaktoren αn und αs ab, die strömender Bewegung und schießender Bewegung zugeordnet sind. Fig. 4 zeigt die Abhängigkeit der Korrekturfaktoren αn und αs von Ug/Ur. Ersichtlich sind die zugehörigen Kurven 44 bzw. 46 erheblich voneinander verschieden. Mit den jeweiligen Korrekturfaktoren αn bzw.

αs wird in einem Multiplikator 48 Ur multipliziert. Das Ergebnis ist ein Ausgangssignal S, das dem Strom durch das Meßrohr 2 proportional ist, ob nun eine strömende Bewegung oder eine schießende Bewegung vorliegt.

## Patentansprüche

1. Vorrichtung zur Messung des Stroms einer ein Meßrohr (2) durchströmenden Flüssigkeit mit einer oberhalb des Meßrohrs (2) angeordneten Spule (4), einer unterhalb des Meßrohrs (2) angeordneten Spule (6) und zwei an den Seiten des Meßrohrs (2) einander gegenüberstehend angeordnete Elektroden (8, 10), bei dem die Spulen (4, 6) zur Erzeugung gleichsinniger und gegensinniger Magnetfelder erregbar sind und eine Korrekturschaltung vorgesehen ist, die die bei gleichsinnigen Magnetfeldern dem Strom der Flüssigkeit nur ungefähr proportionale Spannung (Ur) zwischen den Elektroden (8, 10) zu einem dem Strom der Flüssigkeit proportionalen Ausgangssignal (S) mittels einer Korrekturfunktion (Ug/Ur) korrigiert, die von den Spannungen (Ur, Ug) zwischen den Elektroden bei gleichsinnigen und gegensinnigen Magnetfeldern abhängt,
**dadurch gekennzeichnet,**
**daß** die Korrekturfunktion (Ug/Ur) einem der strömenden Bewegung (Fr < 1) zugeordneten Korrelator (40) zur Erzeugung eines der strömenden Bewegung entsprechenden Korrektursignals (αn) und einem der schießenden Bewegung (Fr > 1) zugeordneten Korrelator (42) zur Erzeugung eines der schießenden Bewegung entsprechenden Korrektursignals (αs) zugeführt ist und daß die den gleichsinnigen Magnetfeldern entsprechende Spannung (Ur) und die Korrekturfunktion (Ug/Ur) einem Komparator (32) zugeführt sind, der in Abhängigkeit davon, ob die Relation zwischen dieser Spannung (Ur) und der Korrekturfunktion (Ug/Ur) einer strömenden Bewegung (Fr < 1) oder einer schießenden Bewegung (Fr > 1) der Flüssigkeit durch das Meßrohr (2) entspricht bewirkt, daß mit dem einen Korrektursignal (αn) oder dem anderen Korrektursignal (αs) die den gleichsinnigen Magnetfeldern entsprechende Spannung (Ur) zur Erzeugung des Ausgangssignals (S) korrigiert wird.

2. Vorrichtung nach Anspruch 1, **dadurch gekennzeichnet, daß** die Korrekturfunktion (Ug/Ur) durch den Quotienten aus der den gegensinnigen Magnetfeldern entsprechenden Spannung (Ug) und der den gleichsinnigen Magnetfeldern entsprechenden Spannung (Ur) gebildet ist und daß das Ausgangssignal (S) dem Produkt aus der den gleichsinnigen Magnetfeldern entsprechenden Spannung (Ur) und dem jeweiligen Korrektursignal (αn, αs) entspricht.

## Claims

1. Device for measuring the flow of a fluid flowing through a measuring pipe (2), comprising
a coil (4) arranged above said measuring pipe (2),
a coil (6) arranged below said measuring pipe (2), and
a pair of electrodes (8, 10) facing each other, on the sides of said measuring pipe (2),
wherein said coils (4, 6) are excitable for producing aiding and opposing magnetic fields,
and a correction circuit is provided for correcting the voltage (Ur) between said electrodes (8, 10) only approximately proportionate to the flow of the fluid in the presence of aiding magnetic fields to an output signal (S) proportionate to the flow of the fluid by means of a correction function (Ug/Ur) depending on the voltages (Ur, Ug) between the electrodes in the presence of aiding and opposing magnetic fields,
**characterised in that** the correction function (Ug/Ur) is supplied to a correlator (40) associated with the flowing movement (Fr < 1) for producing a correction signal (α n) representing the flowing movement, and to a correlator (42) associated with the rushing movement (Fr > 1) for producing a correction signal (α s) representing the rushing movement, and that the voltage (Ur) corresponding to the aiding magnetic fields and the correction function (Ug/Ur) are supplied to a comparator (32) which in response to whether the relation between this voltage (Ur) and the correction function (Ug/Ur) corresponds to a flowing movement (F < 1) or a rushing movement (Fr > 1) of the fluid through the measuring pipe (2) causes the voltage (Ur) corresponding to the aiding magnetic fields to be corrected by means of the one correction signal (α n) or the other correction signal (α s) for producing the output signal (S).

2. Device according to claim 1 **characterised in that** the correction function (Ug/Ur) is formed by the quotient from the voltage (Ug) corresponding to the opposing magnetic fields and the voltage (Ur) corresponding to the aiding magnetic fields, and
that the output signal (S) represents the product from the voltage (Ur) corresponding to the aiding magnetic fields and the respective correction signal (α n, α s).

## Revendications

1. Dispositif pour la mesure du débit d'un liquide s'écoulant dans un tube de mesure (2), avec une bobine (4) placée au-dessus du tube de mesure (2), une bobine (6) placée au-dessous du tube de mesure (2) et deux électrodes (8, 10) placées en vis-à-vis sur les côtés du tube de mesure (2), dans lequel les bobines (4, 6) peuvent être excitées pour produire des champs magnétiques de même sens et de sens opposés et il est prévu un circuit de correction, qui corrige la tension (Ur) entre les électrodes (8, 10), seulement approximativement proportionnelle au débit du liquide dans le cas de champs magnétiques de même sens, en un signal de sortie (S) proportionnel au débit du liquide au moyen d'une fonction de correction (Ur/Ug), qui dépend des tensions (Ur, Ug) entre les électrodes pour des champs magnétiques de même sens et de sens opposés,
**caractérisé en ce que** la fonction de correction (Ug/Ur) est envoyée à un corrélateur (40) associé au régime fluvial (Fr < 1) pour produire un signal de correction (αn) correspondant au régime fluvial, et à un corrélateur (42) associé au régime torrentiel (Fr > 1) pour produire un signal de correction (αs) correspondant au régime torrentiel et **en ce que** la tension (Ur) correspondant à des champs magnétiques de même sens et la fonction de correction (Ug/Ur) sont envoyées à un comparateur (32) qui, selon que la relation entre cette tension (Ur) et la fonction de correction (Ug/Ur) correspond à un régime fluvial (Fr < 1) ou à un régime torrentiel (Fr > 1) du liquide dans le tube de mesure (2), détermine que la tension (Ur) correspondant à des champs magnétiques de même sens est corrigée avec l'un (αn) ou l'autre (αs) signal de correction pour produire le signal de sortie (S).

2. Dispositif selon la revendication 1, **caractérisé en ce que** la fonction de correction (Ug/Ur) est formée par le quotient de la tension (Ug) correspondant aux champs magnétiques de même sens et de la tension (Ur) correspondant aux champs magnétiques de sens opposés, et **en ce que** le signal de sortie (S) correspond au produit de la tension (Ur) correspondant aux champs magnétiques de même sens et du signal de correction (αn, αs) respectif.
